# FASCICULE DE BREVET EUROPEEN

(11) **EP 4 261 007 B1**
(45) Date de publication et mention de la délivrance du brevet: **13.11.2024**
(21) Numéro de dépôt: 23162251.5
(22) Date de dépôt: 16.03.2023
(51) Int. Cl.: B29C 49/12, B29C 49/66, B29C 49/06, B29K 67/00, B29L 31/00

(54) **TIGE D'ÉTIRAGE POUR LA FORMATION DE RÉCIPIENTS**
STRECKSTANGE ZUR HERSTELLUNG VON BEHÄLTERN
STRETCHING ROD FOR FORMING CONTAINERS

(30) Priorité: 13.04.2022 FR 2203422
(43) Date de publication de la demande: 18.10.2023
(73) Titulaire: Sidel Participations, 76930 Octeville-sur-Mer (FR)
(72) Inventeur: NAVEAU, Laurent, 76930 OCTEVILLE-SUR-MER (FR)
(74) Mandataire: Sidel Group

(56) Documents cités:
- EP-A1- 1 063 076
- FR-A1- 3 022 824
- US-A- 5 213 752
- US-A1- 2011 193 271

## Description

**Domaine technique** : La présente invention relève du domaine de la fabrication de récipients par soufflage ou étirage-soufflage à partir de préformes en matériau thermoplastique, telle que par exemple le polyéthylène téréphtalate, ci-après « PET ». Elle a plus particulièrement pour objet une tige d'étirage destinée à être mise en oeuvre dans une technique d'étirage soufflage pour la formation de récipients. Elle a également pour objet un procédé de fabrication de récipients mettant en oeuvre la tige d'étirage selon l'invention.

**Etat de la technique** : Il est connu de former des récipients en matériau thermoplastique par étirage soufflage de préformes préalablement chauffées à une température suffisante pour en ramollir les parois.

A cet effet, on utilise un dispositif de formage qui comporte un moule présentant une cavité conformée à l'empreinte du récipient à obtenir. La préforme préalablement chauffée est reçue dans la cavité. Puis, ses parois sont soumises à un étirage dit "biaxial" pour venir épouser l'empreinte du moule. Pour ce faire, la préforme est étirée axialement au moyen d'une tige d'étirage pour provoquer l'expansion axiale de la préforme. Simultanément à cette opération d'étirage, un fluide sous pression est injecté dans la préforme de manière à provoquer l'expansion radiale de la paroi.

Un tel procédé de formage est bien connu. Pour que le récipient final présente un fond parfaitement moulé, il est préférable que la tige d'étirage soit adaptée pour garantir une épaisseur satisfaisante de la paroi du récipient. Une mauvaise répartition de la matière est un défaut récurrent constaté sur les récipients produits par un procédé de moulage et étirage/soufflage. Il ne s'agit pas nécessairement de veiller à ce que l'épaisseur de la paroi du récipient soit constante, car dans certains cas il peut être souhaitable d'épaissir certaines zones, en particulier celles destinées à subir des contraintes importantes (notamment à proximité du fond). Il s'agit plutôt de veiller à ce que l'épaisseur de matière corresponde au cahier des charges du récipient, tel que défini en fonction de sa forme et de son utilisation.

Des procédés ont ainsi été mis au point pour favoriser une répartition de la matière adaptée à des cahiers des charges exigeants.

En outre, dans le domaine de la fabrication de récipients par moulage et étirage/soufflage, il est fait de plus en plus recours à du PET recyclé, pour des raisons environnementales. Ce matériau augmente encore le problème de distribution de la matière car il présente des propriétés différentes d'absorption de chauffe.

Par ailleurs, malgré les précisions apportées aux procédés d'étirage soufflage, visant notamment à améliorer la distribution de la matière au niveau du fond du récipient soufflé, il existe encore des problèmes. En particulier, la conception de la tige va avoir un impact sur la distribution matière, ainsi que sur la température induite à l'intérieur du récipient, au contact de la tige sur le récipient.

Il peut alors apparaitre un problème de centrage, de répartition matière, et d'affaissement prononcé du fond en sortie du moule.

**Arrière-plan technique** : Le document US 9 085 099 se propose d'améliorer le procédé de soufflage des brevets en fixant temporairement la tige d'étirage au fond de la préforme. Ce procédé nécessite une étape de d'aspiration du fond de la préforme qui peut amener d'autres problèmes. Le document FR3022824 propose lui une tige d'étirage de forme élargie. Cette tige pose des problèmes au moment de l'insertion dans la préforme car elle peut toucher les parois internes et est très contraignante en termes de formats de préformes.

On connaît également le document EP1063076 qui décrit une tige d'étirage pour une unité de moulage pour la fabrication d'un récipient à partir d'une préforme, ladite tige d'étirage s'étendant longitudinalement, parallèlement à un axe principal, comprenant un corps de forme cylindrique ou tubulaire ; une extrémité distale dans le prolongement dudit corps ; un méplat situé à l'extrémité distale de la tige d'étirage et ; un embout saillant à partir dudit méplat ; une jupe annulaire dans le prolongement dudit corps, au niveau de ladite extrémité distale, ladite jupe ayant une hauteur inférieure à la hauteur dudit embout. Le diamètre de la jupe est très largement supérieur au diamètre du corps de la tige d'étirage de telle sorte que la jupe de grand diamètre presse la partie de coin, ladite portion de coin étant la partie de la préforme reliant le corps de la préforme au fond de ladite préforme.

**Résumé de l'invention** : Les solutions actuelles ne sont pas satisfaisantes et il existe un besoin pour améliorer encore l'étape d'étirage soufflage afin d'obtenir des récipients de meilleure qualité en ce qui concerne le centrage de la bouteille et la répartition de la matière.

L'invention vise à résoudre ce problème et propose, à cet effet, une tige d'étirage qui assure un étirage de la préforme suivant son axe, en évitant les contacts indésirables entre l'extérieur de la tige et l'intérieur du corps de la préforme, tout en améliorant le centrage de ladite tige et en diminuant ainsi les transferts de chaleur entre la tige et la préforme.

A cet effet, l'invention concerne une tige d'étirage pour une unité de moulage pour la fabrication d'un récipient à partir d'une préforme, ladite tige d'étirage s'étendant longitudinalement, parallèlement à un axe principal Y, comprenant
- un corps de forme cylindrique ou tubulaire ;
- une extrémité distale dans le prolongement dudit corps ;
- un méplat situé à l'extrémité distale de la tige d'étirage et ;
- un embout saillant à partir dudit méplat.

La tige d'étirage selon l'invention est caractérisée en qu'elle comprend une jupe annulaire dans le prolongement dudit corps, au niveau de ladite extrémité distale, ladite jupe ayant une hauteur inférieure à la hauteur dudit embout, ledit embout présentant un diamètre inférieur au diamètre du corps de la tige et le diamètre de l'extrémité libre de la jupe étant inférieur ou égal à 14 mm.

De préférence, ladite jupe présente un diamètre plus petit ou égal au diamètre du corps de la tige d'étirage.

Selon une caractéristique additionnelle, les bords de la jupe annulaire et/ou de l'extrémité de l'embout sont arrondis.

Selon une autre caractéristique, le corps extérieur et la jupe annulaire comprennent une seule pièce.

Selon une caractéristique additionnelle, l'embout est de forme conique.

Selon une autre caractéristique, le méplat s'étend orthogonalement à l'axe principal Y. La jupe annulaire peut présenter une forme crénelée.

La jupe annulaire peut présenter une forme crénelée avec des bords de crêtes arrondis et convexes et des bords de creux concaves.

L'invention concerne encore un procédé de fabrication d'un récipient par étirage soufflage mettant en oeuvre la tige d'étirage selon l'invention, comprenant au moins les étapes suivantes de
- placement d'une préforme préalablement chauffée dans un moule de soufflage présentant, en position de fermeture, une cavité de moulage formant l'empreinte du récipient à souffler ;
- fermeture dudit moule de soufflage ;
- soufflage de ladite préforme dans le moule de soufflage par l'intermédiaire d'une tuyère de soufflage et, de manière sensiblement simultanée, une étape d'étirage de ladite préforme par insertion de la tige d'étirage à l'intérieur de ladite préforme en prenant appui contre le fond de ladite préforme de manière à faciliter l'allongement axial de ladite préforme ;
- remontée de ladite tige d'étirage ;
- extraction dudit récipient soufflé par ouverture dudit moule de soufflage. Brève description des figures : L'invention sera mieux comprise grâce à la description ci-dessous, qui se base sur des modes de réalisations possibles, expliqués de façon illustrative et nullement limitative, en référence avec les figures annexées, dans lesquelles :
   - [Fig. 1] représente schématiquement une vue simplifiée de dessus d'un exemple de réalisation d'une machine de moulage de type rotative, illustrant notamment les unités de moulage (sans les moyens de soufflage et d'étirage) réparties autour d'un carrousel, lesdites unités de soufflage étant, en fonction de leur position relative par rapport à l'entrée ou la sortie de la machine, en position ouverte ou en position fermée ;
   - [Fig. 2] représente schématiquement une vue partielle en perspective d'une des unités de moulage de la machine selon l'exemple de réalisation de la figure 1, illustrant notamment, hors de l'unité en position ouverte, une vue éclatée d'un moule réalisé en trois parties, à savoir deux demi-moules et un fond de moule ;
   - [Fig. 3] représente schématiquement une vue selon une coupe médiane longitudinale verticale d'une unité de moulage de la machine, au cours d'une première étape d'un cycle de soufflage d'un récipient, montrant notamment l'insertion de l'extrémité distale de la tige dans une préforme enfermée au sein d'un moule ;
   - [Fig. 4] représente schématiquement une vue similaire à la figure 3, au cours d'une autre étape suivante en fin du cycle de soufflage, montrant notamment l'extrémité distale de la tige introduite au sein du récipient soufflé et s'étendant jusqu'au fond dudit récipient soufflé ;
   - [Fig. 5] représente schématiquement une vue en perspective d'un premier mode de réalisation de l'extrémité distale de la tige d'étirage, montrant notamment une jupe annulaire présentant des bords arrondis ;
   - [Fig. 6] représente schématiquement une vue selon une coupe médiane longitudinale du premier mode de la figure 5 ;
   - [Fig. 7] représente schématiquement une vue selon une coupe médiane longitudinale d'un deuxième mode de réalisation de l'extrémité distale de la tige d'étirage, montrant notamment une jupe annulaire présentant des bords droits et biseautés ;
   - [Fig. 8] représente schématiquement une vue selon une coupe médiane longitudinale d'un troisième mode de réalisation de l'extrémité distale de la tige d'étirage, montrant notamment la jupe annulaire présentant une forme crénelée avec des bords de crêtes arrondis et convexes et des bords de creux concaves ;
   - [Fig. 9] représente schématiquement une vue selon une coupe médiane longitudinale d'un quatrième mode de réalisation de l'extrémité distale de la tige d'étirage, montrant notamment la jupe annulaire avec un profil convergent depuis le corps de ladite tige vers son extrémité distale.
   - [Fig. 10] représente schématiquement une vue de côté d'un mode de réalisation de l'extrémité distale de la tige d'étirage, montrant notamment une jupe avec un bord annulaire inscrit dans un même plan, ainsi que l'embout et le méplat en pointillés ;
   - [Fig. 11] représente schématiquement une vue de côté encore d'un autre mode de réalisation, montrant une jupe avec des bords crénelés droits, avec des crêtes et des creux ; et
   - [Fig. 12] représente schématiquement une vue de côté d'un mode de réalisation, montrant une jupe avec des bords crénelés arrondis.

Description détaillée de l'invention : Dans la suite de la description, des éléments présentant une structure identique ou des fonctions analogues seront désignés par une même référence.

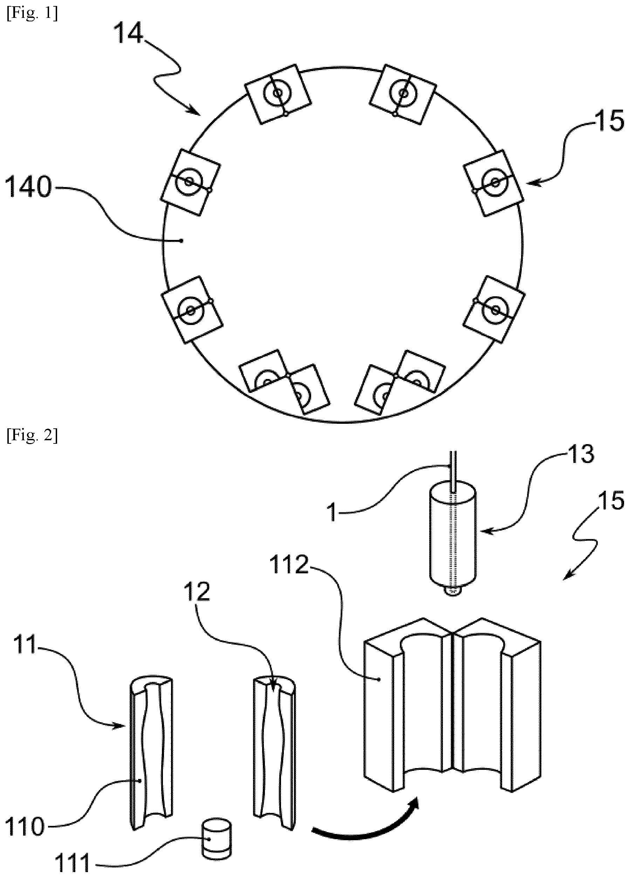

L'invention est conçue pour être mise en oeuvre dans une installation de fabrication de récipients 2. Une telle installation comporte, usuellement, une machine 14 de moulage telle que représentée en figure 1, comportant au moins des unités de moulage 15, chaque unité de moulage 15 comportant au moins des moyens de soufflage intégrant une tige d'étirage 1, ledit moule 11 comportant au moins deux demi-moules 110 qui comportent chacun une face interne de moulage et qui sont respectivement montés sur des supports mobiles autour d'un axe Y, entre au moins une position ouverte et une position fermée de l'unité de moulage 15, dans laquelle lesdites faces internes desdits au moins deux demi-moules 110 joints délimitent ensemble une cavité de moulage 12 du récipient 2.

En pratique, les moules de soufflage 11 sont répartis circulairement, sous la forme d'un carrousel 140, comme visible en figure 1, et surmontés par des installations de soufflage respectives. En pratique, toujours, et comme visible sur la figure 2, le corps de l'installation de soufflage s'étend sensiblement verticalement au-dessus du moule et sensiblement coaxialement à la cavité 12 de moulage du moule de soufflage 11.

La figure 2 représente schématiquement une vue en perspective d'une des unités de moulage 15 de la machine 14 selon l'exemple de réalisation de la figure 1, illustrant notamment, hors de l'unité 15 en position ouverte, une vue éclatée d'un moule 11 réalisé en trois parties, à savoir deux demi-moules 110 et un fond 111 de moule.

Tous ces éléments sont bien connus de l'Homme du métier et ne sont pas décrits en détail pour une meilleure compréhension de l'invention.

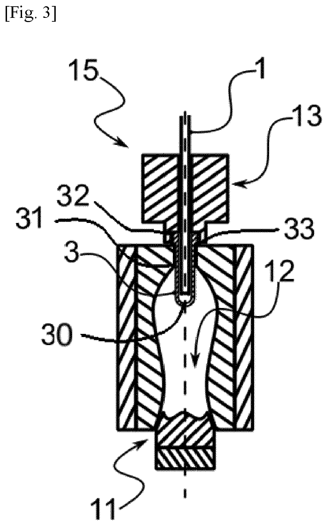

On se réfère à la figure 3, montrant un premier mode de réalisation d'une tige 1 conforme à l'invention, en vue en coupe partielle longitudinale, qui est mis en oeuvre avec une préforme 3 en PET ou en PET recyclé, destinée à être étirée et soufflée dans un des moules de soufflage 11 d'une installation décrite brièvement ci-dessus, de manière à former un récipient 2, tel qu'une bouteille.

Sur la figure 3, la tige 1 d'étirage est en position haute et en cours d'insertion dans la préforme 3. La tige 1 est conçue pour être montée dans le corps de l'installation de soufflage évoquée également ci-dessus. Ladite tige d'étirage 1 s'étend longitudinalement, parallèlement à l'axe principal Y. La tige d'étirage 1 selon l'invention est une tige d'étirage pleine. Elle présente une première extrémité dite proximale (non représentée) apte à être solidarisée à un dispositif de déplacement interne à l'installation de fabrication.

Comme visible sur la figure 3, la préforme 3 comporte, de façon en soit classique, un corps de forme allongé, tubulaire, d'axe Y, limité par une paroi 31 solidaire en partie haute d'un col 32 fileté et en partie basse d'un fond 30 sensiblement hémisphérique. Entre le col 32 et le corps de la préforme, une collerette 33 radiale fait saillie vers l'extérieur de la préforme 3.

De manière générale, la préforme 3 illustrée en figure 3 présente une symétrie de révolution autour de son axe Y.

Lors de la mise en place de la préforme dans l'installation de soufflage, l'axe Y de la tige 1 est sensiblement confondu avec l'axe de révolution de la préforme 3. Dans ce qui suit, on désignera donc indifféremment par Y l'axe de la tige 1 ou celui de la préforme 3.

Dans ce qui suit, on qualifiera de « vertical » toute direction parallèle à l'axe de révolution de la tige et de « transversal » toute direction perpendiculaire à l'axe de révolution de la tige.

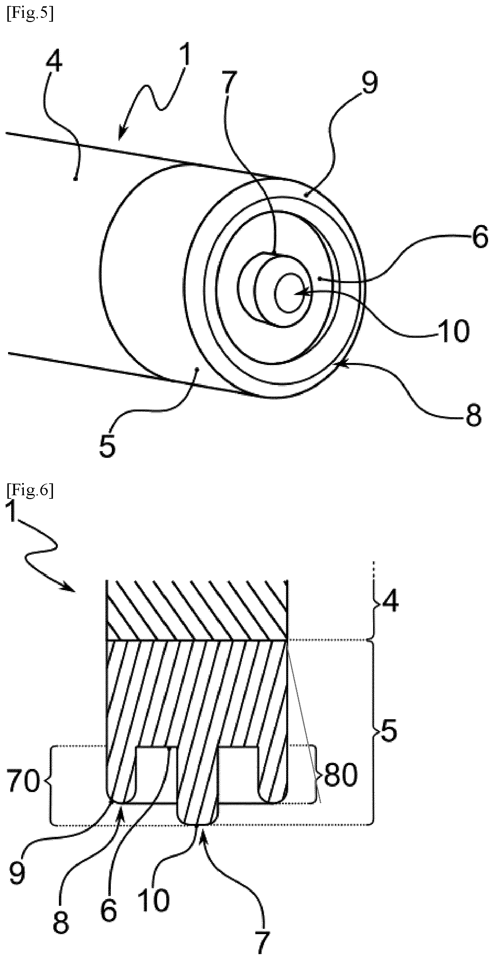

Comme représenté en figure 5, la tige d'étirage 1 comprend un corps 4 cylindrique ou tubulaire. Dans des modes de réalisation, le corps 4 de la tige d'étirage 1 peut présenter un épaulement, c'est-à-dire présenter deux sections longitudinales ayant deux diamètres différents. Cela est particulièrement avantageux pour le soufflage de préformes de faible diamètre.

Dans le prolongement du corps 4, au niveau de l'extrémité distale 5, la tige d'étirage 1 comprend un méplat 6. Un embout 7 fait saillie à partir de ce méplat 6.

Comme visible en figure 5, la tige d'étirage 1 comprend en outre, une jupe annulaire 8 dans le prolongement de son corps 4.

La figure 3 représente l'étape d'insertion de la tige d'étirage 1 dans la cavité de soufflage 12.

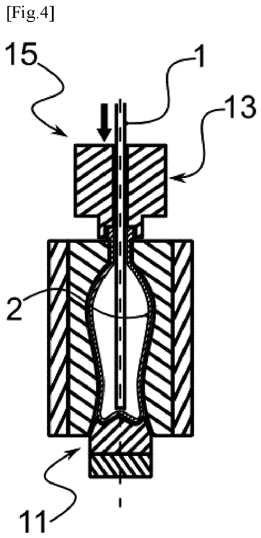

La figure 4 représente schématiquement une autre étape d'un cycle de soufflage, dans laquelle la tige d'étirage 1 est en position basse et donc placée au fond 30 de la préforme 3 pendant l'étape de soufflage. Durant cette étape, la préforme 3 devient un récipient 2.

Dans des modes de réalisation, et comme représenté sur la figure 5, le diamètre de la jupe annulaire 8 est égal au diamètre du corps 4 de la tige d'étirage 1. Dans cette configuration avantageuse, le centrage est encore amélioré. En effet, lors de l'étirage, la matière vient fluer dans le creux de la jupe 8, tendant ainsi à la bloquer, évitant ainsi tout glissement et permettant donc un bon centrage.

Dans des modes de réalisation, le corps 4 et la jupe annulaire 8 sont obtenus d'un seul tenant. En d'autres termes, ils forment une seule et même pièce.

Selon d'autres modes de réalisation, le corps 4 et la jupe annulaire 8 sont deux pièces séparées.

Les modifications structurelles de la tige d'étirage 1 ont pour effet avantage de permettre de centrer parfaitement la tige 1 dans la préforme 3 vers le fond de la préforme, sur l'ensemble de sa surface inférieure, tout en limitant la diffusion de la chaleur entre ladite tige 1 et le fond 30 de la préforme 3, et ainsi d'améliorer l'étape d'étirage-soufflage.

L'embout 7 saillant peut être de toute forme. En particulier, ledit embout 7 peut être de forme conique, de forme conique arrondie, de forme ovoïde, de forme hémisphérique, etc. Néanmoins, quelle que soit la forme dudit embout 7, ce dernier est toujours inscrit dans un cylindre dont le diamètre est inférieur au diamètre du corps 4 de la tige d'étirage 1. Selon un mode de réalisation préféré, comme représenté en figure 5, le méplat 6 est perpendiculaire au corps 4 de la tige d'étirage 1. Cela permet une meilleure distribution et un meilleur contrôle de l'étape de soufflage.

La figure 6 représente une vue selon une coupe médiane longitudinale d'un exemple de réalisation de l'extrémité distale de la tige d'étirage, montrant notamment une jupe annulaire 8 présentant des bords 9 arrondis et un embout 7 de forme cylindrique. Dans ce mode de réalisation, les bords 9 de la jupe annulaire 8 sont arrondis. Ceci est particulièrement avantageux car il permet d'éviter tout risque de déchirement si lesdits bords 9 venaient à toucher la paroi de la préforme 3, par exemple lors de la phase d'étirage.

Dans cet exemple de réalisation, la jupe annulaire 8 a le même diamètre que le diamètre du corps 4 de la tige d'étirage 1. Néanmoins, la jupe 8 peut présenter un diamètre plus petit ou plus grand que le corps 4 de la tige d'étirage 1 selon d'autres modes de réalisation. Toutefois, le diamètre de l'extrémité libre de la jupe 8 est toujours inférieur ou égal à 14 mm de sorte que ladite jupe 8 ne prenne appui que sur le fond de la préforme et ne prenne jamais appui sur la portion de coin de la préforme, ladite portion de coin étant la partie de la préforme reliant le corps de la préforme au fond de ladite préforme.

En outre, comme visible sur la figure 6, la jupe annulaire 8 a une hauteur 80 inférieure à la hauteur 70 de l'embout 7 de sorte que ledit embout 7 fait saillie de la jupe annulaire 8. En d'autres termes, l'extrémité distale de la tige d'étirage 1 est formée par l'embout 7 et la jupe annulaire 8 est un prolongement du corps 4 extérieur par rapport au méplat 6. Cela permet donc de garantir un centrage parfait de la tige 1 tout en limitant la diffusion de la chaleur entre ladite tige 1 et la préforme 3 qui forme ensuite le récipient 2 à l'issue de l'étape de soufflage.

Dans un mode de réalisation préféré, la hauteur 80 de la jupe annulaire 8 est inférieure à la hauteur 70 de l'embout 7 d'une valeur comprise entre 0,5 et 4 millimètres (mm), encore plus préférentiellement d'une valeur de 1mm.

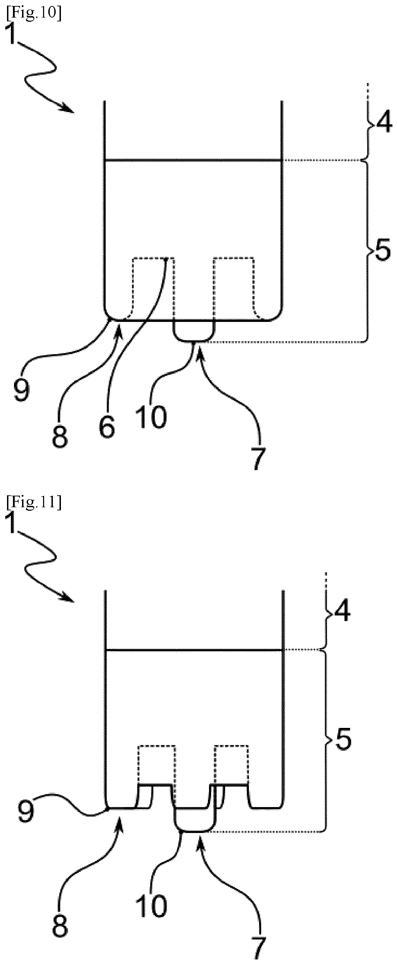

Dans des modes de réalisation, la hauteur 80 de la jupe annulaire 8 varie sur l'ensemble de sa circonférence. Par exemple, la jupe annulaire 8 peut avoir des bords 9 dentelés ou festonnés, et donc présenter des creux et des crêtes, comme visible sur la figure 11. Néanmoins, dans ce cas, la hauteur 80 reste inférieure à la hauteur 70 de l'embout 7. Toute combinaison de forme de bords 9 et de diamètre de la jupe annulaire 8 est possible.

La présence de la jupe annulaire 8 selon l'invention a pour avantage d'améliorer considérablement l'étape d'étirage soufflage.

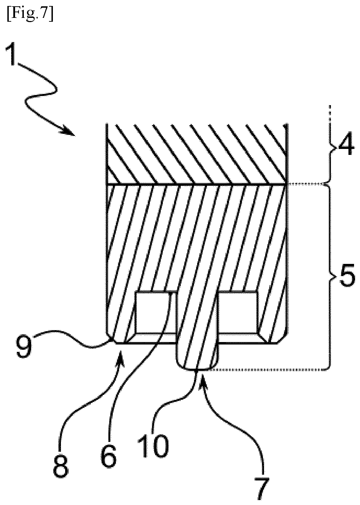

Dans des modes de réalisation, la jupe annulaire 8 de la tige d'étirage 1 présente des bords 9 droits et biseautés. Ce mode de réalisation est illustré en figure 7.

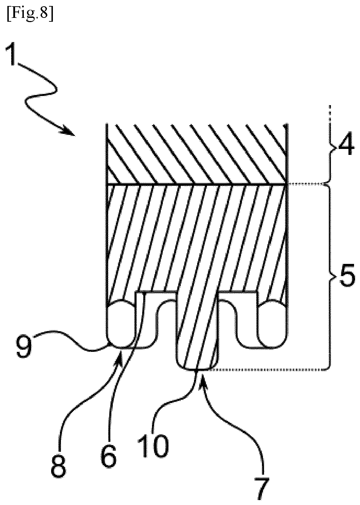

Dans un mode de réalisation illustré en figure 8, la jupe annulaire 8 présente une forme crénelée avec des bords 9 de crêtes arrondis et convexes et des bords de creux concaves.

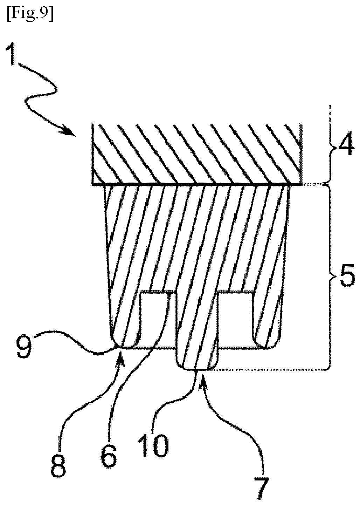

Dans une autre variante, comme illustré en figure 9, la jupe annulaire 8 présente un diamètre convergent depuis le corps 4 de la tige 1 vers l'embout 7 saillant. En d'autres termes, son diamètre diminue vers la portion extrême libre et la jupe annulaire 8 a donc une forme rétrécie. La jupe annulaire 8 présente une section qui diminue à partir du méplat 6, jusqu'à son extrémité libre distale.

Selon une autre variante, non représentée, le diamètre de la jupe annulaire 8 est supérieur au diamètre du corps 4 de la tige d'étirage 1. La jupe annulaire 8 a alors une forme évasée. On comprendra par « forme évasée » une forme dont la section croît. Ainsi, une portion extrême libre de jupe annulaire 8 de forme évasée signifie que la portion extrême de ladite jupe présente une section qui grandit à partir du méplat 6, jusqu'à son extrémité libre.

La figure 10 représente schématiquement une vue de côté d'un mode de réalisation de l'extrémité distale de la tige d'étirage, montrant notamment une jupe 8 avec un bord annulaire inscrit dans un même plan, ainsi que l'embout 7 et le méplat 6 en pointillés.

Les figures 11 à 12 montrent des variantes de réalisation de la jupe annulaire 8, présentant des creux et des crêtes.

La figure 11 montre une jupe 8 avec des bords 9 crénelés droits, avec des crêtes et des creux, avec une hauteur 80 de jupe toujours inférieure à la hauteur 70 de l'embout 7.

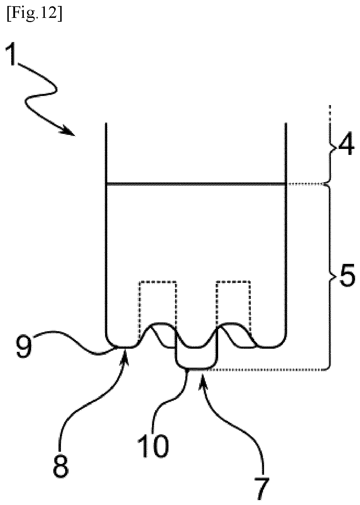

La figure 12 montre une jupe 8 ayant des bords 9 crénelés arrondis.

L'invention concerne également un procédé de fabrication d'un récipient 2 par étirage soufflage mettant en oeuvre la tige d'étirage précédemment décrite.

Le procédé de fabrication selon l'invention comprend au moins les étapes suivantes de :
- placement d'une préforme 3 préalablement chauffée dans un moule de soufflage 11 présentant, en position de fermeture, une cavité de moulage 12 formant l'empreinte du récipient 2 à souffler ;
- fermeture dudit moule de soufflage 11 ;
- soufflage de ladite préforme 3 dans le moule de soufflage 11 par l'intermédiaire d'une tuyère de soufflage 13 et, de manière sensiblement simultanée, une étape d'étirage de ladite préforme 3 par insertion de la tige d'étirage 1 à l'intérieur de ladite préforme 3 en prenant appui contre le fond 30 de ladite préforme 3 de manière à faciliter l'allongement axial de ladite préforme 3 ;
- remontée de ladite tige d'étirage 1 ;
- saisie du récipient 3 soufflé par des moyens de préhension extérieurs ;
- ouverture dudit moule de soufflage 11.

La figure 1 représente une vue de dessus qui représente schématiquement un exemple de réalisation d'une machine 14 de moulage de type rotative et qui illustre les unités 15 de moulage (sans les moyens de soufflage et d'étirage) réparties circonférentiellement sur le carrousel 140 et qui, en fonction de leur position relative par rapport à l'entrée ou la sortie de la machine 14, sont en position ouverte ou en position fermée.

La fabrication d'un récipient 2 est réalisée par soufflage d'une préforme 3 chaude dans un moule 11 d'une unité 15 de moulage de l'installation au moyen d'au moins un fluide sous pression, généralement de l'air.

Dans l'exemple de réalisation, la fabrication des récipients 2 est réalisée par étirage-soufflage. Les moyens de soufflage intègrent avantageusement au moins une tige d'étirage 1.

La figure 2 représente schématiquement une vue partielle en perspective d'une des unités de moulage 15 de la machine selon l'exemple de réalisation de la figure 1, illustrant notamment, hors de l'unité en position ouverte, une vue éclatée d'un moule 11 réalisé en trois parties, à savoir deux demi-moules 110 et un fond de moule 111. L'on peut également y voir le porte-moule 112, la tuyère 13 et la tige d'étirage 1.

La tige d'étirage 1 est entraînée axialement, le long de l'axe Y, en déplacement par des moyens d'entraînement associés (non représentés).

La tige d'étirage 1 est donc montée coulissante axialement pour être introduite à l'intérieur de la préforme 3 à travers l'ouverture délimitée radialement par son col 32, un espace annulaire étant laissé libre entre le col 32 et la tige 1 pour permettre le passage du fluide de soufflage.

La tige d'étirage 1 est montée mobile axialement entre au moins une première position haute et une deuxième position basse.

Dans la première position, la tige 1 s'étend hors du moule 11 et, dans la deuxième position, dite position basse, la tige 1 est déplacée vers le bas pour venir étirer axialement la préforme 3 à l'intérieur du moule 11, lors du soufflage.

Les figures 3 à 4 illustrent certaines des étapes de la fabrication d'un récipient 2 et les différentes positions de la tige d'étirage 1 durant ces étapes.

Une première étape, comme visible sur la figure 3 concerne donc l'introduction d'une préforme 3 dans un moule de soufflage 11. La préforme 3 a été préalablement chauffée à une température supérieure à la température de transition vitreuse de la matière (laquelle est d'environ 80°C dans le cas du PET).

Une fois la préforme 3 en position et le moule 11 fermé, comme visible sur la figure 4, la tige d'étirage 1 est insérée à l'intérieur de la préforme 3, jusqu'à venir en position basse, c'est-à-dire qu'elle se positionne sur le fond de la préforme 3.

Dans un mode de réalisation préféré, la position basse de la tige d'étirage 1 correspond à une position où l'embout 7 touche le fond de la préforme 3.

Dans d'autres modes de réalisation, la position basse de la tige d'étirage 1 correspond à une position où l'embout 7 est légèrement en retrait par rapport au fond de la préforme 3.

Sensiblement simultanément à l'insertion de la tige d'étirage 1 dans la préforme 3, vient l'étape de soufflage, ou d'étirage soufflage, au cours de laquelle un fluide (par exemple de l'air) est injecté dans la préforme 3, d'abord à une pression moyenne dite de pré-soufflage, comprise entre 5 bars et 15 bars, tout en déplaçant la tige d'étirage 1 depuis sa position haute vers sa position basse déployée.

L'étape de soufflage se termine par une augmentation momentanée de la pression jusqu'à une pression élevée, supérieure à la pression de pré-soufflage pour bien plaquer la matière contre la cavité 12 du moule de soufflage 11 et ainsi lui imprimer l'empreinte du récipient 2, comme représenté sur la figure 4. La pression de soufflage est supérieure ou égale à 15 bars, et par ex. d'environ 35 à 40 bars.

La tige d'étirage est maintenue en position déployée pour éviter tout glissement intempestif de la matière sur le fond du moule tant que la pression dans le récipient n'a pas atteint la pression de soufflage.

Enfin, à l'issue de l'étape de soufflage, le moule 11 est ouvert et le récipient 2 formé en est évacué, ce qui boucle le cycle. Un nouveau cycle peut alors commencer avec l'introduction d'une nouvelle préforme 3.

La mise en oeuvre d'une tige d'étirage 1 selon l'invention permet une meilleure maîtrise de l'étape de soufflage. Il est possible, par ce contrôle amélioré, d'augmenter les cadences de soufflage, tout en limitant la diffusion de chaleur de l'interne vers l'externe.

En outre, le centrage étant bien maitrisé du fait de l'utilisation de la tige d'étirage 1 selon l'invention, la répartition matière est donc parfaitement homogène, ce qui offre un potentiel d'allégement supplémentaire, tout en limitant le risque de sur-étirage dans les formes pétaloïdes du fond, dans la limite des taux de bi-orientation généralement recommandés. Par ailleurs, le fait de réduire l'échauffement de la préforme permet de limiter les risques d'affaissement.

En outre, l'utilisation d'une telle tige d'étirage 1 offre une plus grande souplesse dans l'utilisation des préformes, notamment celles dont la forme ne serait pas parfaitement adaptée à la bouteille. Elle permet également de limiter au maximum le contact entre la tige 1 et la préforme 3.

## Revendications

1. Tige d'étirage (1) pour une unité (15) de moulage pour la fabrication d'un récipient (2) à partir d'une préforme (3), ladite tige d'étirage (1) s'étendant longitudinalement, parallèlement à un axe principal Y, comprenant :
- un corps (4) de forme cylindrique ou tubulaire ;
- une extrémité distale (5) dans le prolongement dudit corps (4) ;
- un méplat (6) situé à l'extrémité distale (5) de la tige d'étirage (1) et ;
- un embout (7) saillant à partir dudit méplat (6) ;
- ladite tige (1) étant **caractérisée en ce qu'**elle comprend une jupe annulaire (8) dans le prolongement dudit corps (4), au niveau de ladite extrémité distale (5), ladite jupe (8) ayant une hauteur (80) inférieure à la hauteur (70) dudit embout (7), ledit embout (7) présentant un diamètre inférieur au diamètre du corps (4) de la tige d'étirage (1) et le diamètre de l'extrémité libre de la jupe (8) étant inférieur ou égal à 14 mm.

2. Tige d'étirage (1) selon la revendication 1, **caractérisée en ce que** ladite jupe (8) présente un diamètre plus petit ou égal au diamètre du corps (4) de la tige d'étirage (1).

3. Tige d'étirage (1) selon l'une quelconque des revendications 1 ou 2, **caractérisée en ce que** les bords (9) de ladite jupe (8) et/ou de l'extrémité (10) dudit embout (7) sont arrondis.

4. Tige d'étirage (1) selon l'une quelconques des revendications 1 à 3, **caractérisée en ce que** le corps (4) extérieur et la jupe (8) comprennent une seule pièce.

5. Tige d'étirage (1) selon l'une quelconque des revendications 1 à 4, **caractérisée en ce que** l'embout (7) est de forme conique.

6. Tige d'étirage (1) selon l'une quelconque des revendications 1 à 5, **caractérisée en ce que** le méplat (6) s'étend orthogonalement à l'axe principal Y.

7. Tige d'étirage (1) selon l'une quelconque des revendications 1 à 6, **caractérisée en ce que** la jupe (8) annulaire présente une forme crénelée.

8. Tige d'étirage (1) selon la revendication 7, **caractérisée en ce que** la jupe (8) annulaire présente une forme crénelée avec des bords 9 de crêtes arrondis et convexes et des bords 9 de creux concaves.

9. Procédé de fabrication d'un récipient (2) par étirage soufflage mettant en oeuvre la tige d'étirage (1) selon les revendications 1 à 8, comprenant au moins les étapes suivantes de :
- placement d'une préforme (3) préalablement chauffée dans un moule de soufflage (11) présentant, en position de fermeture, une cavité de moulage (12) formant l'empreinte du récipient (2) à souffler ;
- fermeture dudit moule de soufflage (11) ;
- soufflage de ladite préforme (3) dans le moule de soufflage (11) par l'intermédiaire d'une tuyère de soufflage (13) et, de manière sensiblement simultanée, une étape d'étirage de ladite préforme (3) par insertion de la tige d'étirage (1) à l'intérieur de ladite préforme (3) en prenant appui contre le fond (30) de ladite préforme (3) de manière à faciliter l'allongement axial de ladite préforme (3) ;
- remontée de ladite tige d'étirage (1) ;
- extraction dudit récipient (2) soufflé par ouverture dudit moule de soufflage (11).

## Patentansprüche

1. Streckstange (1) für eine Formeinheit (15) zur Herstellung eines Behälters (2) aus einem Vorformling (3), wobei sich die Streckstange (1) in Längsrichtung parallel zu einer Hauptachse Y erstreckt, umfassend:
- einen zylinder- oder röhrenförmigen Körper (4);
- ein distales Ende (5) in der Verlängerung des Körpers (4);
- eine Abflachung (6), die sich am distalen Ende (5) der Streckstange (1) befindet, und
- eine Spitze (7), die von der Abflachung (6) vorsteht;
wobei die Stange (1) **dadurch gekennzeichnet ist, dass** sie in der Verlängerung des Körpers (4) am distalen Ende (5) eine ringförmige Schürze (8) umfasst, wobei die Schürze (8) eine Höhe (80) aufweist, die kleiner als die Höhe (70) der Spitze (7) ist, wobei die Spitze (7) einen Durchmesser aufweist, der kleiner als der Durchmesser des Körpers (4) der Streckstange (1) ist, und wobei der Durchmesser des freien Endes der Schürze (8) 14 mm oder weniger beträgt.

2. Streckstange (1) nach Anspruch 1, **dadurch gekennzeichnet, dass** die Schürze (8) einen Durchmesser aufweist, der kleiner als oder so groß wie der Durchmesser des Körpers (4) der Streckstange (1) ist.

3. Streckstange (1) nach einem der Ansprüche 1 oder 2, **dadurch gekennzeichnet, dass** die Kanten (9) der Schürze (8) und/oder des Endes (10) der Spitze (7) abgerundet sind.

4. Streckstange (1) nach einem der Ansprüche 1 bis 3, **dadurch gekennzeichnet, dass** der äußere Körper (4) der Schürze (8) einstückig ist.

5. Streckstange (1) nach einem der Ansprüche 1 bis 4, **dadurch gekennzeichnet, dass** die Spitze (7) konusförmig ist.

6. Streckstange (1) nach einem der Ansprüche 1 bis 5, **dadurch gekennzeichnet, dass** sich die Abflachung (6) senkrecht zu Hauptachse Y erstreckt.

7. Streckstange (1) nach einem der Ansprüche 1 bis 6, **dadurch gekennzeichnet, dass** die ringförmige Schürze (8) eine gezackte Form aufweist.

8. Streckstange (1) nach Anspruch 7, **dadurch gekennzeichnet, dass** die ringförmige Schürze (8) eine gezackte Form mit abgerundeten und konvexen Scheitelkanten 9 und konkaven Trogkanten 9 aufweist.

9. Verfahren zur Herstellung eines Behälters (2) durch Streckblasformen unter Verwendung der Streckstange (1) nach Anspruch 1 bis 8, umfassend zumindest die folgenden Schritte:
- Anordnen eines zuvor erhitzten Vorformlings (3) in einer Blasform (11), die in der geschlossenen Position einen Formhohlraum (12) aufweist, der den Abdruck des zu blasenden Behälters (2) bildet;
- Schließen der Blasform (11);
- Blasen des Vorformlings (3) in der Blasform (11) anhand einer Blasdüse (13) und im Wesentlichen gleichzeitig
einen Schritt des Streckens des Vorformlings (3) durch Einführen der Streckstange (1) in das Innere des Vorformlings (3), wobei sie sich gegen den Boden (30) des Vorformlings (3) abstützt, um das axiale Strecken des Vorformlings (3) zu ermöglichen;
- Aufwärtsbewegen der Streckstange (1);
- Entnehmen des geblasenen Behälters (2) durch Öffnen der Blasform (11).

## Claims

1. Stretching rod (1) for a moulding unit (15) for manufacturing a container (2) from a preform (3), said stretching rod (1) extending longitudinally, parallel to a main axis Y, comprising:
- a body (4) of cylindrical or tubular form;
- a distal end (5) in the continuation of said body (4) ;
- a flat (6) situated at the distal end (5) of the stretching rod (1), and;
- an end fitting (7) protruding from said flat (6);
- said rod (1) being **characterized in that** it comprises an annular skirt (8) in the continuation of said body (4), at said distal end (5), said skirt (8) having a height (80) less than the height (70) of said end fitting (7), said end fitting (7) having a diameter smaller than the diameter of the body (4) of the stretching rod (1), and the diameter of the free end of the skirt (8) being smaller than or equal to 14 mm.

2. Stretching rod (1) according to Claim 1, **characterized in that** said skirt (8) has a diameter smaller than or equal to the diameter of the body (4) of the stretching rod (1) .

3. Stretching rod (1) according to either one of Claims 1 and 2, **characterized in that** the edges (9) of said skirt (8) and/or of the end (10) of said end fitting (7) are rounded.

4. Stretching rod (1) according to any one of Claims 1 to 3, **characterized in that** the outer body (4) and the skirt (8) comprise a single piece.

5. Stretching rod (1) according to any one of Claims 1 to 4, **characterized in that** the end fitting (7) is of conical form.

6. Stretching rod (1) according to any one of Claims 1 to 5, **characterized in that** the flat (6) extends orthogonally with respect to the main axis Y.

7. Stretching rod (1) according to any one of Claims 1 to 6, **characterized in that** the annular skirt (8) has a crenelated form.

8. Stretching rod (1) according to Claim 7, **characterized in that** the annular skirt (8) has a crenelated form with rounded and convex peak edges (9) and concave trough edges (9) .

9. Method for manufacturing a container (2) by stretch blow moulding implementing the stretching rod (1) according to Claims 1 to 8, comprising at least the following steps of:
- placing a previously heated preform (3) in a blowing mould (11) having, in closure position, a moulding cavity (12) forming the impression of the container (2) to be blown;
- closing said blowing mould (11);
- blowing said preform (3) in the blowing mould (11) by way of a blowing nozzle (13) and, substantially simultaneously, a step of stretching said preform (3) by insertion of the stretching rod (1) inside said preform (3) by bearing against the bottom (30) of said preform (3) so as to facilitate the axial elongation of said preform (3);
- retracting said stretching rod (1);
- extracting said blown container (2) by opening said blowing mould (11).
